# EUROPÄISCHE PATENTANMELDUNG

(11) **EP 2 133 590 A2**
(43) Veröffentlichungstag der Anmeldung: **16.12.2009**
(21) Anmeldenummer: 09007641.5
(22) Anmeldetag: 10.06.2009
(51) Int. Cl.: F16F 13/14

(54) **Lager**

(30) Priorität: 13.06.2008 DE 102008028115
(71) Anmelder: Carl Freudenberg KG, 69469 Weinheim (DE)
(72) Erfinder: Erl, Andreas, 16761 Henningsdorf (DE); Ebert, Michael, 13055 Berlin (DE); Djahani, Majid, 14469 Potsdam (DE)

(57) **Zusammenfassung**

Lager (1), umfassend einen Kern (2), eine den Kern (2) umgebende Hülse (3) und einen zwischen Kern (2) und Hülse (3) angeordneten Federkörper (4), wobei an zumindest einer Stirnseite (5) des Lagers (1) ein Dichtelement (6) angeordnet ist, welches den Federkörper (4) gegenüber der Umgebung abdichtet.

## Beschreibung

### Beschreibung Technisches Gebiet

Die Erfindung betrifft ein Lager, umfassend einen Kern, eine den Kern umgebende Hülse und einen zwischen Kern und Hülse angeordneten Federkörper.

### Stand der Technik

Derartige Lager sind allgemein bekannt. So ist aus der DE 102 20 219 B4 ein zylindrisches Lager bekannt, welches einen Kern und eine Hülse aufweist, zwischen denen ein Federkörper angeordnet ist. Im unbelasteten Zustand weist der Federkörper eine größere radiale Erstreckung auf als nach der Montage. Dadurch weist der Federkörper nach der Montage eine hohe radiale Vorspannung auf. Derartige Lager weisen den Vorteil einer hohen Radialsteifigkeit bei gleichzeitig geringer Torsionssteifigkeit auf. Aufgrund der hohen Vorspannung ist es nicht erforderlich, den Federkörper stoffschlüssig an den Kern oder die Hülse anzubinden. Eindringender Schmutz kann jedoch, insbesondere bei Relativbewegungen zwischen der freien Oberfläche des Federkörpers und dem Kern beziehungsweise der Hülse, die Oberfläche schädigen. Diese Oberflächenschädigungen können aufgrund der hohen Vorspannung zu einer tieferen Beschädigung des Federkörpers und somit zu einem vorzeitigen Verschleiß des Lagers führen.

### Darstellung der Erfindung

Der Erfindung liegt die Aufgabe zugrunde, das Lager so weiter zu entwickeln, dass der Federkörper vor eindringender Verschmutzung geschützt ist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist an zumindest einer Stirnseite des Lagers ein Dichtelement angeordnet, welches den Federkörper gegenüber der Umgebung abdichtet. Das Dichtelement verhindert, dass Schmutzteilchen in den Zwischenraum zwischen Kern und Hülse eindringen können, welche sonst zu einer Beschädigung des Federkörpers insbesondere an den Anbindungsbereichen des Federkörpers an Kern und Hülse führen könnten. Dies ist insbesondere dann besonders vorteilhaft, wenn der Federkörper ohne Stoffschluss an den angrenzenden Flächen von Kern und Hülse anliegt und der Federkörper nur aufgrund starker Kompression unter radialer Vorspannung steht und sich zwischen Kern und Hülse verklemmt. In diesem Fall könnte insbesondere bei Relativbewegungen eindringender Schmutz zwischen Federkörper und angrenzenden Flächen gelangen, das Material des Federkörpers beschädigen und so zu einem vorzeitigen Verschleiß führen. Das Dichtelement schließt den Federkörper gegenüber der Umgebung ab. Dabei ist das Dichtelement so ausgebildet, dass es den Bewegungen für die das Lager ausgelegt ist nur einen geringen Widerstand leistet. So ist beispielsweise ein Lager mit einem radial komprimierten Federkörper vorzugsweise für Bewegungen in Drehrichtung und in Axialrichtung ausgelegt und ist in diesen Richtung eher weich. In Radialrichtung ist ein derartiges Lager aufgrund der Vorspannung des Federkörpers jedoch hart. Demnach ist das Dichtelement für ein solches Lager so ausgelegt, dass es Relativbewegungen zwischen Kern und Hülse in Drehrichtung und in Axialrichtung widerstandsarm nachvollzieht.

Das Dichtelement kann einen ersten Dichtabschnitt und einen zweiten Dichtabschnitt aufweisen, wobei der erste Dichtabschnitt an dem Kern dichtend anliegt und der zweite Dichtabschnitt an der Hülse dichtend anliegt. Bei zylindrischer Ausführung von Kern und Hülse liegen die Dichtabschnitte dichtend an dem Innenumfang der Hülse und dem Außenumfang des Kerns flächig an und bilden dadurch eine sichere Abdichtung. Des Weiteren kann das Dichtelement weitgehend in das Lager integriert werden, so dass sich an den Gesamtabmessungen des Lagers nur wenig ändert.

Der erste Dichtabschnitt und der zweite Dichtabschnitt können durch einen Steg miteinander verbunden sein. Der Steg ist ein dünnwandiges Bauteil, welches je nach Ausrichtung eine hohe Flexibilität der Relativbewegung der beiden Dichtabschnitte erlaubt. Der Steg kann als Faltenbalg und dadurch besonders flexibel in radialer Richtung ausgebildet sein.

Der Steg kann so ausgebildet sein, dass das Dichtelement im Querschnitt betrachtet Z-förmig ausgebildet ist. Das bedeutet, dass der Steg in Bezug auf die beiden Dichtabschnitte schräg und beispielsweise von einer Stirnseite zur anderen Stirnseite verläuft. Dadurch ergibt sich eine hohe Flexibilität des Dichtelementes insbesondere in Drehrichtung,

Dem ersten Dichtabschnitt und/oder dem zweiten Dichtabschnitt kann ein Tragkörper zugeordnet sein. Dadurch ergibt sich eine höhere Stabilität des Dichtelementes. Die Tragringe können so ausgebildet sein, dass das Dichtelement mit hoher Vorspannung an Kern und Hülse anliegt.

Die den Dichtabschnitten zugeordneten Dichtflächen können mit einer Profilierung versehen sein. Durch die Profilierung verbessert sich die Dichtwirkung des Dichtelementes.

Das Dichtelement kann sich auf die Stirnseite des Kerns erstrecken. Dadurch ergibt sich eine Anschlagfunktion durch die das Dichtelement besonders einfach montierbar ist.

Der dem Kern zugeordnete Tragkörper kann L-förmig ausgebildet sein. Ein Abschnitt des Tragkörpers gelangt dabei direkt oder indirekt an der Stirnseite des Kerns zur Anlage und bildet dadurch einen umlaufenden Anschlag für das Dichtelement.

Das Dichtelement kann auf der dem Kern abweisenden Stirnseite mit einer Anschlagkontur versehen sein. Die Anschlagkontur kann durch einen ringförmigen Wulst oder durch über den Umfang verteilt angeordnete Erhebungen gebildet sein und besteht aus elastomerem Werkstoff. Die Anschlagkontur kann zu einem zum Kern montierten Bauteil zur Anlage gebracht werden, wobei der Anschlag aufgrund des elastomeren Werkstoffs materialschonend erfolgt.

Das Dichtelement kann auf der dem Kern abweisenden Stirnseite eine abragende Dichtlippe aufweisen. Die Dichtlippe kann an einem angrenzenden Bauteil beispielsweise an einem zum Kern montierten Bauteil zur Anlage gebracht werden und verhindert, dass Verschmutzungen in den Zwischenraum zwischen Lager und Bauteil gelangen.

### Kurzbeschreibung der Zeichnung

Einige Ausführungsbeispiele des erfindungsgemäßen Lagers werden nachfolgend anhand der Figuren näher erläutert. Diese zeigen, jeweils schematisch:
Fig. 1 ein Lager mit einem Dichtelement;
Fig. 2 im Detail das in Figur 1 gezeigte Dichtelement;
Fig. 3 ein Lager mit einem Dichtelement;
Fig. 4 im Detail das in Figur 3 gezeigte Dichtelement.

### Ausführung der Erfindung

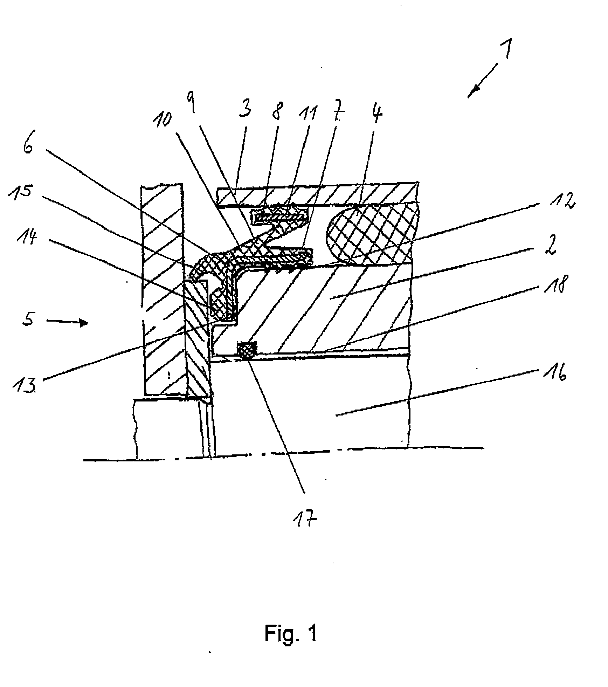

Figur 1 zeigt ein Lager 1, hier ausgebildet als elastomeres Drehgelenk zur Verwendung im allgemeinen Maschinenbau, in der Antriebstechnik oder Fahrzeugtechnik. Derartige Drehgelenke dienen der Lagerung klappbarer Kabinen, von Gehäusedeckeln, Hebeln, Lenker, Motorwippen, Schwingsieben oder Rütteltischen. Das Lager 1 besteht aus einem Kern 2, eine den Kern 2 umgebende Hülse 3 und einen zwischen Kern 2 und Hülse 3 angeordneten Federkörper 4. In dieser Ausführung weist der Federkörper 4 in unbelastetem Zustand eine geringere axiale und eine größere radiale Erstreckung auf als nach der Montage zwischen Kern 2 und Hülse 3. Dadurch ist der Federkörper 4 in radialer Richtung stark komprimiert und dadurch in radialer Richtung besonders steif bei gleichzeitig reduzierter Steifigkeit in axialer und in Drehrichtung. Aufgrund der hohen Vorspannung des Federkörpers 4 ist eine stoffschlüssige Anbindung des Federkörpers 4 an den Kern 2 oder der Hülse 3 nicht erforderlich. An beiden Stirnseiten 5 des Lagers 1 ist ein Dichtelement 6 angeordnet, welches den Federkörper 4 gegenüber der Umgebung abdichtet. Dabei ist das Dichtelement in den konzentrischen Spalt zwischen Kern 2 und Hülse 3 angeordnet, wodurch die axiale Erstreckung des Lagers 1 unverändert bleibt. Das Dichtelement 6 weist einen ersten Dichtabschnitt 7 und einen zweiten Dichtabschnitt 8 auf, wobei der erste Dichtabschnitt 7 außenumfangsseitig an dem Kern 2 dichtend anliegt und der zweite Dichtabschnitt 8 innenumfangsseitig an der Hülse 3 dichtend anliegt. Der erste Dichtabschnitt 7 und der zweite Dichtabschnitt 8 sind durch einen Steg 9 miteinander verbunden, wobei der Steg 9 so ausgebildet ist, dass das Dichtelement 6 im Querschnitt betrachtet Z-förmig ausgebildet ist. Dem ersten Dichtabschnitt 7 und dem zweiten Dichtabschnitt 8 ist jeweils ein Tragkörper 10, 11 zugeordnet und die den Dichtabschnitten 7, 8 zugeordneten Dichtflächen sind mit einer Profilierung 12 versehen. Der dem Kern 2 zugeordnete Tragkörper 10 ist L-förmig ausgebildet ist, wodurch sich das Dichtelement 6 auf die Stirnseite 13 des Kerns 2 erstreckt. Das Dichtelement 6 ist auf der dem Kern 2 abweisenden Stirnseite mit einer Anschlagkontur 14 versehen ist und das Dichtelement 6 weist auf der dem Kern 2 abweisenden Stirnseite eine abragende Dichtlippe 15 auf. Zur Montage des Lagers 1 wird der Kern 2 auf einen Zapfen oder Bolzen 16 aufgeschoben und dort befestigt. Die Befestigung kann so erfolgen, dass der Kern 2 auf dem Bolzen 16 frei drehbar ist. Dazu kann der Zwischenraum zwischen Kern 2 und Bolzen 16 mit einem Schmiermittel, beispielsweise einem Fett befüllt sein. Bei einem frei drehbaren Lager ist es vorteilhaft, dass der Federkörper 4 frei von torsionalen Belastungen ist, die zu einer Überbeanspruchung des Federkörpers 4 führen können. In der vorliegenden Ausführung ist der Kern 2 innenumfangsseitig mit einer reibungsreduzierenden Beschichtung 18 versehen. Um zu verhindern, dass Partikel und andere Verschmutzungen in den Zwischenraum zwischen Kern 2 und Bolzen 16 eindringen, ist der Spalt durch ein weiteres Dichtelement 17 verschlossen. Das weitere Dichtelement ist hier als O-Ring ausgeführt der in einer Nut in dem Kern 2 angeordnet ist.

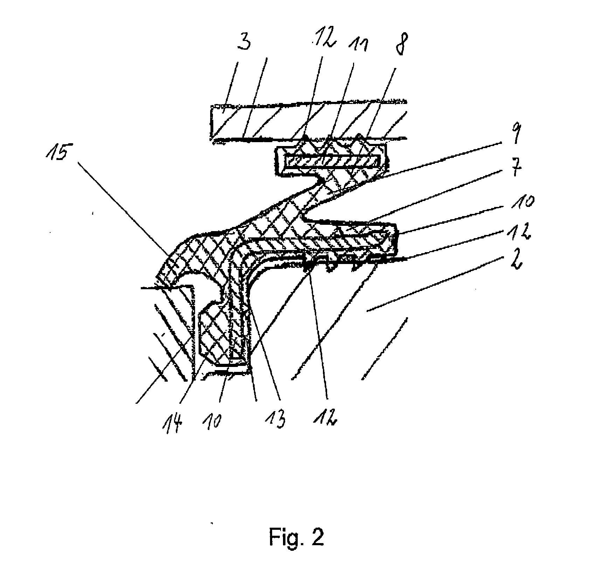

Figur 2 zeigt das in Figur 1 gezeigte Dichtelement 6 im Detail.

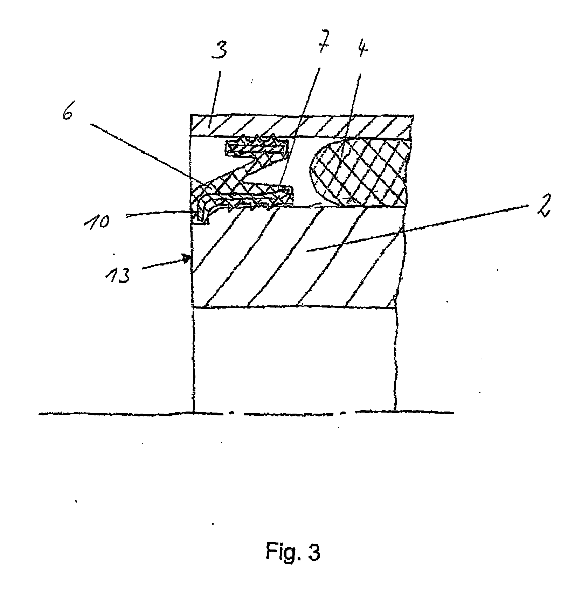

Figur 3 zeigt ein Lager gemäß Figur 1, wobei der sich in radiale Richtung erstreckende Schenkel des dem Kern 2 zugeordneten Tragkörpers 10 kurz ausgebildet ist, so dass dieser Schenkel eine Anschlagfunktion zur Montage des Dichtelementes 6 auf den Kern 2 bildet. In dieser Ausführung sind aber weder Anschlagkontur noch Dichtlippe vorgesehen.

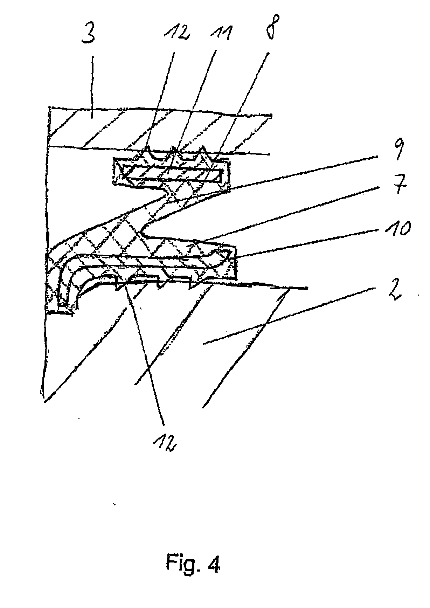

Figur 4 zeigt das in Figur 3 gezeigte Dichtelement 6 im Detail.

## Patentansprüche

1. Lager (1), umfassend einen Kern (2), eine den Kern (2) umgebende Hülse (3) und einen zwischen Kern (2) und Hülse (3) angeordneten Federkörper (4), **dadurch gekennzeichnet, dass** an zumindest einer Stirnseite (5) des Lagers (1) ein Dichtelement (6) angeordnet ist, welches den Federkörper (4) gegenüber der Umgebung abdichtet.

2. Lager nach Anspruch 1, **dadurch gekennzeichnet, dass** das Dichtelement (6) einen ersten Dichtabschnitt (7) und einen zweiten Dichtabschnitt (8) aufweist, wobei der erste Dichtabschnitt (7) an dem Kern (2) dichtend anliegt und der zweite Dichtabschnitt (8) an der Hülse (3) dichtend anliegt.

3. Lager nach Anspruch 2, **dadurch gekennzeichnet, dass** der erste Dichtabschnitt (7) und der zweite Dichtabschnitt (8) durch einen Steg (9) miteinander verbunden sind.

4. Lager nach Anspruch 3, **dadurch gekennzeichnet, dass** der Steg (9) so ausgebildet ist, dass das Dichtelement (6) im Querschnitt betrachtet Z-förmig ausgebildet ist.

5. Lager nach einem der Ansprüche 2 bis 4, **dadurch gekennzeichnet, dass** dem ersten Dichtabschnitt (7) und/oder dem zweiten Dichtabschnitt (8) ein Tragkörper (10, 11) zugeordnet ist.

6. Lager einem der Ansprüche 2 bis 5, **dadurch gekennzeichnet, dass** die den Dichtabschnitten (7, 8) zugeordneten Dichtflächen mit einer Profilierung (12) versehen sind.

7. Lager nach einem der Ansprüche 1 bis 6, **dadurch gekennzeichnet, dass** sich das Dichtelement (6) auf die Stirnseite (13) des Kerns (2) erstreckt.

8. Lager nach Anspruch 7, **dadurch gekennzeichnet, dass** der dem Kern (2) zugeordnete Tragkörper (10) L-förmig ausgebildet ist.

9. Lager nach einem der Ansprüche 1 bis 8, **dadurch gekennzeichnet, dass** das Dichtelement (6) auf der dem Kern (2) abweisenden Stirnseite mit einer Anschlagkontur (14) versehen ist.

10. Lager nach einem der Ansprüche 1 bis 9, **dadurch gekennzeichnet, dass** das Dichtelement (6) auf der dem Kern (2) abweisenden Stirnseite eine abragende Dichtlippe (15) aufweist.
